# EUROPÄISCHE PATENTANMELDUNG

(11) **EP 4 763 751 A1**
(43) Veröffentlichungstag der Anmeldung: **24.06.2026**
(21) Anmeldenummer: 25225046.9
(22) Anmeldetag: 18.12.2025
(51) Int. Cl.: B65G 1/137

(54) **PICK- UND/ODER PACK-STATION UND VERFAHREN ZUM BEREITSTELLEN EINES QUELL- ODER ZIELBEHÄLTERS**

(30) Priorität: 19.12.2024 DE 102024139036
(71) Anmelder: Körber Supply Chain Automation GmbH, 74211 Leingarten (DE)
(72) Erfinder: LARCHER, Enrico, 4615 Holzhausen (AT); BROCKHOFF, Jens, 31137 Hildesheim (DE)
(74) Vertreter: Müller Schupfner & Partner Patent- und Rechtsanwaltspartnerschaft mbB (Muc)

(57) **Zusammenfassung**

Es wird eine Pick- und/oder Pack-Station (1) zum Bereitstellen eines Quell- oder Zielbehälters (2) bereitgestellt. Die Pick- und/oder Pack-Station (1) umfasst eine Verlagerungsvorrichtung (3) zum Verlagern des Quell- oder Zielbehälters (2) von einer Übernahmeposition (P1) in eine Kommissionier-Position (P2), eine Übergabevorrichtung (4) zum Verlagern des Quell- oder Zielbehälters-(2) von der Kommissionier-Position in eine Abgabeposition, wobei die Verlagerungsvorrichtung (3) dazu ausgestaltet ist, bei einer Verlagerung des Quell- oder Zielbehälters (2) von der Übernahmeposition in die Kommissionier-Position, den Quell- oder Zielbehälter (2) in der Schwererichtung (R1) zu verlagern. Ferner wird ein Pick- und/oder Packsystem (10) sowie ein Verfahren zum Bereitstellen eines Quell- oder Zielbehälters (2) in einer Pick- und/oder Pack-Station (1) bereitgestellt.

## Beschreibung

Die vorliegende Offenbarung betrifft eine Pick- und/oder Pack-Station zum Bereitstellen eines Quell- oder Zielbehälters, ein Pick- und/oder Pack-System und ein Verfahren zum Bereitstellen eines Quell- oder Zielbehälters in einer Pick- und/oder Pack-Station.

Bei einem Kommissionierer-Vorgang gibt es das Prinzip "Ware zum Mann". Bei diesem Prinzip werden Artikel oder Waren zu einer Kommissionierperson gebracht, die einen festen Arbeitsplatz hat. An diesem Arbeitsplatz soll sich die Kommissionierperson so wenig wie möglich wegbewegen. Die zu kommissionierenden Artikel werden stattdessen zu der Kommissionierperson transportiert. Die Kommissionierperson wird dann aus einem Quell- oder Zielbehälter einzelne Artikel oder einzelne Waren herausnehmen und in bereitgestellte Zielbehälter oder Kartons überführen. Ist der Quell- oder Zielbehälter fertig kommissioniert, muss dieser ausgewechselt werden, sodass die Kommissionierperson mit der Arbeit fortfahren kann.

Daher ist es vorteilhaft, wenn die Quell- oder Zielbehälter rasch ausgetauscht werden können, da damit die Stillstandzeit der Kommissionierperson verringert werden kann.

Es ist daher eine Aufgabe des Gegenstands der vorliegenden Offenbarung, eine Vorrichtung und ein Verfahren bereitzustellen, bei dem die Effizienz einer Pickund/oder Pack-Station gesteigert sein kann.

Das obige Problem wird mit einer Pick- und/oder Pack-Station mit den Merkmalen des Anspruchs 1, mit einem Pick- und/oder Pack-System mit den Merkmalen des Anspruchs 9 sowie mit einem Verfahren zum Bereitstellen eines Quell- oder Zielbehälters mit den Merkmalen des Anspruchs 10 gelöst.

Gemäß einem Aspekt der vorliegenden Offenbarung wird eine Pick- und/oder Pack-Station zum Bereitstellen eines Quell- oder Zielbehälters bereitgestellt. Die Pick- und/oder Pack-Station kann eine Verlagerungsvorrichtung zum Verlagern des Quell- oder Zielbehälters von einer Übernahmeposition in eine Kommissionier-Position umfassen. Die Pick- und/oder Pack-Station kann eine Übergabevorrichtung zum Verlagern eines Quell- oder Zielbehälters von der Kommissionier-Position in eine Abgabeposition umfassen. Die Verlagerungsvorrichtung kann dazu ausgestaltet sein, bei einer Verlagerung des Quell- oder Zielbehälters von der Übernahmeposition in die Kommissionier-Position, den Quell- oder Zielbehälter in der Schwererichtung zu verlagern.

Gegenüber dem bekannten Stand der Technik, liefert der vorliegende Gegenstand der Offenbarung den Vorteil, dass Quell- oder Zielbehälter besonders schnell nachgeliefert werden können. Mit anderen Worten kann ein neuer Quell- oder Zielbehälter mit zu kommissionierenden Waren oder Artikeln schnell der Kommissionierperson zur Verfügung gestellt werden, wenn ein vorhergehender Quell- oder Zielbehälter nicht mehr benötigt wird. Dazu muss der, z.B. leere, Quell- oder Zielbehälter abtransportiert werden und der, z.B. volle oder teilgefüllte, nachfolgende Quell- oder Zielbehälter wieder in die Kommissionier-Position gebracht werden. Durch die Verlagerung des Quell- oder Zielbehälters in der Schwererichtung kann ein Abführen und ein Zuführen der Quell- oder Zielbehälter übereinander erfolgen. Dadurch können die Quell- oder Zielbehälter schneller bereitgestellt werden. Das Bereitstellen eines Quell- oder Zielbehälters kann auch als Wechseln eines Quelloder Zielbehälters verstanden werden. Mit anderen Worten kann die Pickund/oder Pack-Station auch zum Wechseln von Quell- oder Zielbehältern ausgestaltet sein. Ferner kann die Pick- und/oder Pack-Station auch als Kommissionierstation bezeichnet sein.

Die Pick- und/oder Pack-Station kann eine Vorrichtung sein, an welcher eine Kommissionierperson arbeitet. Die Pick- und/oder Pack-Station kann dabei eine Station sein, an der ein Quellbehälter oder ein Zielbehälter bereitgestellt wird. Der Quellbehälter kann Waren oder Artikel bereitstellen, so dass ein Nutzer diese entnehmen kann. Ein Zielbehälter kann ein leerer oder teilgefüllter Behälter sein, in den ein Nutzer Ware oder Artikel hineinlegt. Dadurch dass die Pick- und/oder Pack-Station geeignet ist für beides eingesetzt zu werden, ist der Einsatzbereich der Pick- und/oder Pack-Station gesteigert. Die Kommissionierperson kann ein Nutzer sein, der die Aufgabe hat, zu kommissionierende Artikel aus einem Quelloder Zielbehälter in eine Vielzahl von Zielbehälter zu überführen. Ein Quell- oder Zielbehälter kann ein Transportelement sein, mit dessen Hilfe Waren oder Artikel transportiert werden können. Mit anderen Worten können einzelne Waren oder Artikel in dem Quell- oder Zielbehälter aufgenommen sein. In einem Quell- oder Zielbehälter können die Artikel gelagert sein. Der Quell- oder Zielbehälter kann eine Schachtel, ein Karton oder dergleichen sein. Genauer gesagt kann der Der Quelloder Zielbehälter jedweder Gegenstand sein, der Artikel oder Waren aufnehmen kann und dazu eingerichtet ist, die Artikel oder Waren zu stützen, beispielsweise während eines Transports. Bereitstellen des Quell- oder Zielbehälters kann hierbei bedeuten, dass der Quell- oder Zielbehälter so zu der Kommissionierperson exponiert wird, dass die Kommissionierperson ohne weiteres in den Quell- oder Zielbehälter hineingreifen kann, um Artikel zu entnehmen. Dabei ist es von Vorteil, wenn der Quell- oder Zielbehälter ungefähr auf Hüfthöhe der Kommissionierperson bereitgestellt wird. Die Verlagerungsvorrichtung kann eine Vorrichtung sein, die dazu ausgestaltet ist, den Quell- oder Zielbehälter physisch im Raum zu verlagern. Dazu kann die Verlagerungsvorrichtung direkt mit dem Quell- oder Zielbehälter in Kontakt gelangen, um diesen von einer Ausgangsposition (beispielsweise der Übernahmeposition) in eine Zielposition (beispielsweise die Kommissionier-Position) überführen. Die Übernahmeposition kann hierbei diejenige Position sein, in der der Pickstation ein Quell- oder Zielbehälter zugeführt wird. Der Quell- oder Zielbehälter kann beispielsweise aus einem Lagersystem oder einer vorgeschalteten Kommissionierung der Pickstation zugeliefert werden. Die Zulieferung kann beispielsweise mit einem Förderband, Fördererrollen oder AGV erfolgen. Die Übernahmeposition kann diejenige Position sein, in der der Quell- oder Zielbehälter an die Verlagerungsvorrichtung übergeben ist. Die Übernahmeposition kann genau die Position sein, wenn der Quell- oder Zielbehälter auf der Verlagerungsvorrichtung aufliegt (d.h. ausschließlich von der Verlagerungsvorrichtung getragen wird). Genauer gesagt die Position, wenn sich der Quell- oder Zielbehälter relativ zu der Verlagerungsvorrichtung nicht mehr verlagert, also seine Endposition (für die Bewegung zwischen der Übernahmeposition und der Kommissionier-Position) auf der Verlagerungsvorrichtung erreicht hat. Während der Bewegung zwischen der Übernahmeposition und der Kommissionier-Position kann sich der Quell- oder Zielbehälter nicht mehr relativ zu der Verlagerungsvorrichtung bewegen. Von der Übernahmeposition kann die Verlagerungsvorrichtung dann den Quell- oder Zielbehälter in die Kommissionier-Position verlagern. In der Kommissionier-Position kann der Kommissionier-Vorgang durch die Kommissionierperson starten. Der Kommissionier-Vorgang kann hierbei ein Packen oder ein Entnehmen von Waren aus einem Behälter sein. In der Kommissionier-Position können Waren oder Artikel entweder aus dem Quell- oder Zielbehälter entnommen werden oder in diesen eingeführt werden. Ist der Kommissionier-Vorgang abgeschlossen, kann die Übergabevorrichtung dazu ausgestaltet sein, den Quell- oder Zielbehälter aus der Kommissionier-Position abzutransportieren. Die Übergabevorrichtung kann genauer gesagt dazu ausgestaltet sein, den Quell- oder Zielbehälter von der Kommissionier-Position in eine Abgabeposition zu überführen. Die Abgabeposition kann diejenige Position sein, an welcher die Pick- und/oder Pack-Station den Quell- oder Zielbehälter wieder einem Förderelement übergibt, damit der Quelloder Zielbehälter von der Pickstation wegtransportiert wird. Die Verlagerungsvorrichtung kann ferner dazu ausgestaltet sein, den Quell- oder Zielbehälter von der Übernahmeposition in die Kommissionier-Position in der Schwererichtung zu transportieren. Mit anderen Worten kann die Verlagerungsvorrichtung den Quelloder Zielbehälter entgegen der Erdanziehungskraft verlagern. Somit kann der Quell- oder Zielbehälter der Kommissionier-Position von unten zugeführt werden. Dies bietet die Möglichkeit, dass der abzutransportierende Quell- oder Zielbehälter in eine andere Richtung aus der Kommissionier-Position entfernt werden kann, sodass der Wechsel der Quell- oder Zielbehälter schneller vollzogen werden kann. Die Schwererichtung kann auch als Richtung, in der die Anziehungskraft wirkt oder Vertikalrichtung bezeichnet werden. Die vorliegende Pick- und/oder Pack-Station kann so betrieben werden, dass die Verlagerungsvorrichtung und die Übergabevorrichtung nicht miteinander gekoppelt sind. Mit anderen Worten können die Verlagerungsvorrichtung und die Übergabevorrichtung so ausgestaltet sein, dass sie unabhängig voneinander und individuell betrieben und/oder angesteuert werden können. Damit kann eine Kopplung beider Elemente vermieden werden, was die Steuerung der Pick- und/oder Pack-Station vereinfacht. Ferner sind keine Transmissionsvorrichtungen nötig, die eine Antriebskraft zwischen mehreren Elementen verteilen müssten wie beispielsweise ein Riemen oder dergleichen.

Optional weist die Pick- und/oder Pack-Station einen Linearantrieb auf, der dazu ausgestaltet ist, die Verlagerungsvorrichtung bei einer Verlagerung des Quelloder Zielbehälters zwischen der Übernahmeposition und der Pickposition anzutreiben. Als Linearantrieb können Antriebssysteme bezeichnet werden, die zu einer translatorischen Bewegung führen. Der Linearantrieb kann die Bewegung der Verlagerungsvorrichtung in gerader Linie oder einem anderen vorgegebenen Verlauf ermöglichen. Der Linearantrieb kann dabei so ausgestaltet sein, dass er ausschließlich die Verlagerung des Quell- oder Zielbehälters zwischen der Übernahmeposition und der Pickposition bewirkt. Mit anderen Worten kann dieser Linearantrieb ansonsten kein weiteres Element oder Bauteil der Pick- und/oder Pack-Station antreiben. Dadurch kann der Linearantrieb einfach ausgestaltet sein und die Steuerung ist weniger komplex als wie, wenn noch weitere Elemente damit betrieben werden müssten. Dadurch kann auf einfache Art und Weise die Verlagerungsvorrichtung realisiert sein, ohne dass Getriebe oder dergleichen notwendig sind.

Optional weist die Verlagerungsvorrichtung eine gabelartige Trägerstruktur zum Tragen des Quell- oder Zielbehälters auf. Die gabelartige Struktur kann direkt mit dem Quell- oder Zielbehälter in Kontakt kommen. Dadurch kann der Quell- oder Zielbehälter ausreichend gestützt werden und gleichzeitig ein geringes Gewicht der Verlagerungsvorrichtung realisiert sein. Ferner besteht dadurch die Möglichkeit, dass wenn kein Quell- oder Zielbehälter auf der Trägerstruktur angeordnet ist, die Trägerstruktur wenig Platzbedarf aufweist. Dadurch kann die Kontur der Trägerstruktur reduziert werden. Folglich kann der benötigte Raum, die die Trägerstruktur zum Verlagern braucht, gering sein.

Optional ist die Trägerstruktur starr ausgebildet. Mit anderen Worten kann die Trägerstruktur eine passive Trägerstruktur sein. Das kann bedeuten, dass die Trägerstruktur selber keinen Antrieb oder Förderlimit aufweist. Somit muss der Quelloder Zielbehälter von einer externen Förderereinrichtung oder Aktuatoreinheit auf die Trägerstruktur aufgebracht werden und von dieser entfernt werden. Dadurch kann die Trägerstruktur einfacher ausgestaltet sein. Mit anderen Worten kann die Trägerstruktur lediglich in der Schwererichtung bewegt werden, ohne dass die Trägerstruktur irgendeine Art von Förderelement aufweist.

Optional weist die Trägerstruktur einen ersten Träger und einen zweiten Träger auf, die jeweils dazu ausgestaltet sind, mit einem Quell- oder Zielbehälter in direkten Kontakt zu gelangen. Mit anderen Worten kann der erste Träger und der zweite Träger Teil der Gabelstruktur sein. Der erste Träger kann als Kragarm ausgestaltet sein. Der zweite Träger kann als Kragarm ausgestaltet sein. Damit kann der Quell- oder Zielbehälter an zwei Kanten gestützt werden. Ist kein Quell- oder Zielbehälter auf der Trägerstruktur aufgebracht, kann die Trägerstruktur zwischen dem ersten Träger und dem zweiten Träger ein anderes Element passieren lassen. Dadurch kann die Kontur der Trägerstruktur reduziert sein. Die Kontur der Trägerstruktur kann der Raum sein, den die Trägerstruktur benötig, beispielsweise wenn sich die Trägerstruktur bewegt.

Optional ist die Verlagerungsvorrichtung dazu ausgestaltet, während einer Verlagerung des Quell- oder Zielbehälters von der Übernahmeposition in die Kommissionier-Position, den Quell- oder Zielbehälter relativ zu der Horizontalen zu neigen. Die Neigung des Quell- oder Zielbehälters kann auch als Orientierung des Quelloder Zielbehälters bezeichnet sein. Wird der Quell- oder Zielbehälter in der Übernahmeposition bereitgestellt, kann der Quell- oder Zielbehälter horizontal ausgerichtet sein. Das kann bedeuten, dass ein Boden des Quell- oder Zielbehälters parallel zu der Horizontalen verläuft. Dies ist bei Förderereinrichtungen wie Förderbänder oder Rollenförderern üblicherweise so, dass diese horizontal ausgerichtet sind, um ein selbstständiges Verlagern von transportierten Gütern aufgrund der Erdanziehungskraft zu vermeiden. Folglich kann die Pick- und/oder Pack-Station mit bekannten Förderlösungen verbunden werden. Wird der Quell- oder Zielbehälter an der Übernahmeposition also horizontal aufgenommen, kann die Verlagerungseinrichtung diese Orientierung des Quell- oder Zielbehälters ändern. Insbesondere kann die Verlagerungsvorrichtung dem Behälter so zu der Kommissionierperson neigen, dass diese besonders einfach die Artikel entnehmen kann. Dadurch kann die Ergonomie der Pick- und/oder Pack-Station gesteigert sein. Diese Neigung kann während der Verlagerung zwischen der Übernahmeposition und der Kommissionier-Position erfolgen. Dadurch ist keine weitere Zeit nötig, um die Orientierung des Quell- oder Zielbehälters zu ändern.

Optional kann die Verlagerungseinrichtung dazu ausgestaltet sein, die Orientierung des Quell- oder Zielbehälters bei einer Verlagerung des Quell- oder Zielbehälters zwischen der Übernahmeposition und der Kommissionier-Position zu variieren. Somit kann der Quell- oder Zielbehälter auch in mehrere Orientierungen gebracht werden. Dies ist beispielsweise dann vorteilhaft, wenn in der Pick- und/oder Pack-Station besonders wenig Platz vorhanden ist, und der Quell- oder Zielbehälter um ein Hindernis oder anderes Element herumgeführt werden muss. Dadurch kann die Pick- und/oder Pack-Station besonders platzsparend ausgeführt sein.

Optional ist die Verlagerungsvorrichtung dazu ausgestaltet, mit einer Steuerkurve zusammenzuwirken, um bei einer Verlagerung des Quell- oder Zielbehälters zwischen der Übernahmeposition und der Kommissionier-Position zu variieren. Mit anderen Worten kann die Verlagerungsvorrichtung ein Kontaktelement (beispielsweise eine Nocke) aufweisen, das mit einer Steuerkurve, welche an der Pickund/oder Pack-Station vorgesehen ist, zusammenwirkt. Abhängig von einer örtlichen Position der Verlagerungsvorrichtung zwischen der Übernahmeposition und der Kommissionier-Position kann das Kontaktelement durch die Steuerkurve in eine andere Position oder eine andere Stellung gebracht werden. Abhängig von der Position des Kontaktelements kann die Verlagerungsvorrichtung die Trägerstruktur, auf welcher der Quell- oder Zielbehälter aufliegt, neigen. Dadurch kann abhängig von der Position zwischen der Übernahmeposition und der Kommissionier-Position eine Orientierung bzw. Neigung des Quell- oder Zielbehälters variiert werden. Dadurch kann sichergestellt sein, dass der Quell- oder Zielbehälter in der Kommissionier-Position wie gewünscht geneigt ist. Ferner kann entsprechend der Ausgestaltung der Steuerkurve eine Neigung des Quell- oder Zielbehälters bei der Verlagerung zwischen der Übernahmeposition und der Kommissionier-Position variiert werden.

Optional kann die Verlagerungsvorrichtung bei einer Verlagerung des Quell- oder Zielbehälters von der Übernahmeposition in die Kommissionier-Position in einer Führung geführt sein. Die Führung kann eine Hinterschneidung sein, in der ein Kontaktelement oder ein anderes Führungselement der Verlagerungsvorrichtung aufgenommen ist. Die Führung kann den Verlagerungsweg der Verlagerungsvorrichtung zwischen der Übernahmeposition der Kommissionier-Position definieren. Die Verlagerungsvorrichtung kann beispielsweise durch einen Ketten- oder Zahnriemenantrieb angetrieben sein, der lediglich für die Kraftaufbringung in der Schwererichtung ausgebildet ist. Die genaue Positionierung der Verlagerungsvorrichtung kann durch die Führung realisiert sein. Das Kontaktelement kann ein Rollenelement sein, welches in der Führung geführt ist. Dadurch kann der Verschleiß reduziert sein und die Geräuschemission verringert sein. Ferner kann das Kontaktelement ein schlittenartiges Führungselement sein, welches zwei Rollen aufweist. Dadurch kann ein Verdrehen des Kontaktelements vermieden werden.

Optional ist die Führung so ausgestaltet, dass die Verlagerungsvorrichtung bei einer Verlagerung des Quell- oder Zielbehälters zwischen der Übernahmeposition und der Kommissionier-Position, die Orientierung des Quell- oder Zielbehälters variieren kann. Mit anderen Worten kann die Führung dazu genutzt werden, um die Orientierung (beispielsweise die Neigung) des Quell- oder Zielbehälters anzupassen. So kann beispielsweise durch eine vorbestimmte Form der Führung nicht nur die Lage der Verlagerungsvorrichtung im Raum, sondern auch deren Orientierung im Raum angepasst werden. Dadurch kann zum einen wegabhängig und zum anderen auf einfache Art und Weise die Orientierung des Quell- oder Zielbehälters angepasst werden.

Optional weist die Führung eine Bogenform auf. Dadurch kann der Quell- oder Zielbehälter entlang einer Bogenform geführt werden. Folglich kann eine Neigung des Quell- oder Zielbehälters auf einfache Art und Weise bereitgestellt sein. Dies kann insbesondere dadurch erreicht werden, dass der Quell- oder Zielbehälter in durchgehender Fahrt von Übernahme bis Endposition verlagerbar ist. Im Bereich der Übernahmeposition kann die Führung so ausgestaltet sein, dass der Quelloder Zielbehälter eben auf die Verlagerungsvorrichtung aufgebracht werden kann. In der Kommissionier-Position kann der Quell- oder Zielbehälter mitsamt der Verlagerungsvorrichtung dann relativ zur Horizontalen geneigt sein. Die Führung kann einen Radius von 2500 bis 3000 mm aufweisen. Hierbei hat sich gezeigt, dass bei üblichen Körpergrößen der Kommissionier-Position der Quell- oder Zielbehälter in eine ausreichende Neigung verlagert ist, dass die Kommissionierperson problemlos hineingreifen kann. Steht die Kommissionier--Person selbst auf einem verstellbaren Podest (um den Arbeitsplatz an die Körpergröße anzupassen) hat es sich als vorteilhaft erwiesen, einen Radius von 2750 mm zu wählen. Hierbei ist ein besonders ergonomisches Arbeiten für die Kommissionierperson ermöglicht.

Optional beschreibt die Verlagerungsvorrichtung bei einer Verlagerung des Quelloder Zielbehälters von der Übernahmeposition in die Kommissionier-Position eine bogenförmige Trajektorie. Bei einer Trajektorie kann es sich um eine Bahnkurve, einen Pfad oder einen Weg handeln, der einen Verlauf einer Raumkurve, entlang der sich ein Körper oder ein Punkt bewegt, beschreiben. Mit anderen Worten kann sich die Verlagerungsvorrichtung bei der Verlagerung zwischen der Übernahmeposition in die Kommissionier-Position nicht nur die Neigung verändern und die Position in der Vertikalrichtung (beispielsweise Z-Richtung), sondern auch in einer anderen Raumrichtung. Mit anderen Worten kann sich die Verlagerungsvorrichtung so im Raum verlagern, dass eine gewünschte Kommissionier-Position erreicht ist. Dadurch kann die Verlagerungsvorrichtung an eine beliebige Pickund/oder Pack-Station angepasst werden, um eine für die Kommissionier-Position optimale Kommissionier-Position zu erreichen.

Optional weist die Pick- und/oder Pack-Station einen Transportmechanismus auf, der dazu ausgestaltet ist, den Quell- oder Zielbehälter in die Übernahmeposition zu transportieren, sodass die Verlagerungsvorrichtung den Quell- oder Zielbehälter handhaben kann. Mit anderen Worten kann der Transportmechanismus dafür ausgestaltet sein, den Quell- oder Zielbehälter von einem Zuförderer zu übernehmen und in die Übernahmeposition zu bringen. In der Übernahmeposition kann der Quell- oder Zielbehälter auf der Verlagerungsvorrichtung aufliegen. Die Verlagerungsvorrichtung kann eine passive Verlagerungsvorrichtung sein, die selbst kein Fördermittel aufweist. Der Transportmechanismus kann separat von der Verlagerungsvorrichtung vorgesehen sein. Der Transportmechanismus kann beispielsweise ein Förderelement sein, welches den Quell- oder Zielbehälter von dem Zuförderer auf die Verlagerungsvorrichtung überführt. In dem Fall, bei dem die Verlagerungsvorrichtung eine gabelartige Trägerstruktur aufweist, kann der Transportmechanismus den Quell- oder Zielbehälter auf die Trägervorrichtung verlagern. Der Transportmechanismus kann beispielsweise ein Bandelement sein, welches angrenzend an die Verlagerungsvorrichtung in der Übernahmeposition angeordnet ist. So kann der Quell- oder Zielbehälter beispielsweise durch einen Zufuhrförderer zumindest teilweise auf den Transportmechanismus aufgebracht werden und sodann von dem Transportmechanismus übernommen werden und vollständig auf die Verlagerungsvorrichtung aufgebracht werden. Dadurch kann sichergestellt sein, dass der Quell- oder Zielbehälter korrekt auf die Verlagerungsvorrichtung aufgebracht ist.

Optional ist der Transportmechanismus feststehend vorgesehen und/oder angeordnet. Mit anderen Worten kann die Verlagerungsvorrichtung zwischen der Übernahmeposition und der Kommissionier-Position hin und her wechseln, wohingegen der Transportmechanismus feststehend ist. Der Transportmechanismus kann stets in der Übernahmeposition verbleiben. Dadurch kann die Verlagerungsvorrichtung einfacher ausgestaltet sein und es muss der Transportmechanismus nicht zwischen der Kommissionier-Position und der Übernahmeposition hin und her bewegt werden.

Optional weist der Transportmechanismus zumindest ein Band- oder Zahnriemenelement auf, das dazu ausgestaltet ist, den Quell- oder Zielbehälter auf die Verlagerungsvorrichtung zu bewegen. Mit anderen Worten kann der Transportmechanismus als umlaufendes Förderband ausgestaltet sein, welches den Quell- oder Zielbehälter transportieren kann. In einer Ausführungsform weist der Transportmechanismus zwei parallel zueinander angeordnete Bandelemente auf. Somit kann sichergestellt sein, dass der Quell- oder Zielbehälter korrekt auf die Verlagerungsvorrichtung aufgebracht wird.

Optional weist die Übergabevorrichtung ein bewegliches Handhabungselement auf, das dazu ausgestaltet ist, den Quell- oder Zielbehälter aus der Kommissionier-Position zu ziehen. Die Übergabevorrichtung kann eine Vorrichtung sein, die die Kommissionier-Position mit einem Abförderer verbindet. Die Übergabevorrichtung kann relativ zu der Horizontalen geneigt sein. Damit kann die Übergabevorrichtung den Quell- oder Zielbehälter optimal aus einer geneigten Position, in welcher sich der Quell- oder Zielbehälter in der Kommissionier-Position befinden kann, übernehmen. Die Übergabevorrichtung kann aus einem feststehenden Teil und einem beweglichen Teil bestehen. Das bewegliche Teil kann ein bewegliches Handhabungselement sein. Das Handhabungselement kann den Quell- oder Zielbehälter aus der Kommissionier-Position abtransportieren. Genauer gesagt kann das Handhabungselement den Pick-Behälter so in Richtung zu dem Abförderer transportieren, dass der Quell- oder Zielbehälter optimal an den Abförderer abgegeben werden kann. Das bewegliche Handhabungselement kann zwischen einer ausgefahrenen Position und eine eingefahrenen Position hin und her bewegt werden. In der ausgefahrenen Position kann das Handhabungselement sich in der Kommissionier-Position befinden. In der eingefahrenen Position kann das Handhabungselement die Kommissionier-Position so freigegeben haben, dass die Verlagerungsvorrichtung den Quell- oder Zielbehälter in die Kommissionier-Position transportieren kann. Dadurch kann Raum geschaffen werden, in den die Verlagerungsvorrichtung den Quell- oder Zielbehälter hineinfördern kann. Das bewegliche Handhabungselement kann nur dann in die ausgefahrene Position verlagert werden, wenn ein Quell- oder Zielbehälter in der Kommissionier-Position angeordnet ist. Dadurch kann die Pick- und/oder Pack-Station auf engstem Raum realisiert sein, sodass für die Kommissionier-Position war minimale Wege zurückzulegen sind.

Optional ist das Handhabungselement dazu ausgestaltet, den Quell- oder Zielbehälter zumindest teilweise in der Pick Position zu tragen. Mit anderen Worten kann der Quell- oder Zielbehälter in der Kommissionier-Position durch das Handhabungselement getragen sein. Dabei kann sich das Handhabungselement in der ausgefahrenen Position befinden. Beispielsweise kann die Verlagerungsvorrichtung den Quell- oder Zielbehälter in die Kommissionier-Position transportieren, wobei dort der Quell- oder Zielbehälter von dem Handhabungselement übernommen wird. Dies liefert den Vorteil, dass die Verlagerungsvorrichtung wieder in Richtung der Übernahmeposition bewegt werden kann, solange der Quell- oder Zielbehälter in der Kommissionier-Position durch das Handhabungselement gehalten ist. Dadurch kann der Kommissionier-Vorgang durchgeführt werden, solange die Verlagerungsvorrichtung wieder auf dem Weg in die Übernahmeposition ist. Dadurch kann ein neuer Quell- oder Zielbehälter bereits durch die Verlagerungsvorrichtung aufgenommen werden, solange der vorherige Quell- oder Zielbehälter noch durch die Kommissionierperson entladen wird. Ist der Quell- oder Zielbehälter dann entladen, kann das Handhabungselement in die eingezogene Position verlagert werden und dabei den Quell- oder Zielbehälter aus der Kommissionier-Position abtransportieren. Sobald der Quell- oder Zielbehälter durch das Handhabungselement aus der Kommissionier-Position entfernt ist, kann der nachfolgende Quell- oder Zielbehälter durch das Verlagerungselement in die Kommissionier-Position gebracht werden. Dadurch kann ein schneller Wechsel der Quell- oder Zielbehälter realisiert sein.

Optional kann das Handhabungselement dazu ausgestaltet sein, sich zwischen einen ersten Träger und einen zweiten Träger der Verlagerungsvorrichtung zu bewegen. Somit kann sowohl die Verlagerungsvorrichtung als auch das Handhabungselement zeitgleich in der Kommissionier-Position vorgesehen sein. Dadurch dass das Handhabungselement zwischen die Elemente (d. h. den ersten und zweiten Träger) der Verlagerungsvorrichtung bewegt werden kann, können das Handhabungselement und die Verlagerungsvorrichtung zeitgleich in der Kommissionier-Position angeordnet sein, ohne sich zu stören. Dadurch kann der Quelloder Zielbehälter in der Kommissionier-Position von der Verlagerungsvorrichtung auf das Handhabungselement übergeben werden. Dies liefert den Vorteil, dass die Verlagerungsvorrichtung wieder in Richtung der Übernahmeposition bewegt werden kann, während der Kommissionier-Vorgang noch nicht abgeschlossen ist. Dadurch können die Wechselzeiten der Quell- oder Zielbehälter erhöht werden. Optional ist das Handhabungselement tischartig ausgebildet. Mit anderen Worten kann das Handhabungselement plattenartig ausgestaltet sein. Dadurch kann erreicht werden, dass das Handhabungselement unter einen Quell- oder Zielbehälter, welcher in der Kommissionier-Position angeordnet ist, verfahren werden kann. Genauer gesagt kann das Handhabungselement in der ausgefahrenen Position unter den Quell- oder Zielbehälter verfahren werden. Durch die flache bzw. tischartige Ausgestaltung des Handhabungselements kann das Handhabungselement auch in einen geringen Freiraum hinein verlagert werden, um den Quell- oder Zielbehälter in der Kommissionier-Position zu übernehmen.

Optional kann das Handhabungselement dazu ausgestaltet sein, den Quell- oder Zielbehälter in der Pick Position zu unterfahren. Dadurch kann das Handhabungselement in eine Position gebracht werden, in der es den Quell- oder Zielbehälter problemlos stützen kann, sobald die Verlagerungsvorrichtung von der Kommissionier-Position in die Übernahmeposition verlagert wird.

Optional kann die Übergabevorrichtung dazu ausgestaltet sein, die Orientierung bei einer Bewegung des Quell- oder Zielbehälters aus der Kommissionier-Position, zu variieren. Dies kann umgesetzt werden, wenn der Quell- oder Zielbehälter in der Kommissionier-Position geneigt angeordnet ist. Da der Abförderer (d. h. die Fördervorrichtung, die im Anschluss an die Übergabevorrichtung vorgesehen ist) horizontal angeordnet ist. Somit muss die Übergabevorrichtung den abzufördernden Quell- oder Zielbehälter wieder in eine horizontale Position verlagern.

Dadurch kann die Pick- und/oder Pack-Station problemlos an herkömmliche Förderer angeschlossen werden.

Optional ist die Übergabevorrichtung dazu ausgestaltet, den Quell- oder Zielbehälter von einer relativ zu horizontalen geneigten Position in der Kommissionier-Position in eine andere Neigung zu überführen. Optional ist die andere Neigung im Wesentlichen parallel zu der Horizontalen. Somit kann problemlos die Pickund/oder Pack-Station an einen Abförderer angeschlossen werden. Die Übergabevorrichtung kann hierbei ein Kippen des Quell- oder Zielbehälters ermöglichen. Zusätzlich oder alternativ kann der Übergabeförderer eine Bogenform beschreiben, sodass der Quell- oder Zielbehälter in eine andere Orientierung (d. h. beispielsweise Neigung) überführt werden kann. Somit kann der Quell- oder Zielbehälter bei einer Abförderung im Wesentlichen parallel zu der Horizontalen vorgesehen sein.

Optional kann das Handhabungselement dazu ausgestaltet sein, sich zwischen einen ersten Träger und einen zweiten Träger der Verlagerungsvorrichtung zu bewegen. Somit kann sowohl die Verlagerungsvorrichtung als auch das Handhabungselement zeitgleich in der Kommissionier-Position vorgesehen sein. Dadurch dass das Handhabungselement zwischen die Elemente (d. h. den ersten und zweiten Träger) der Verlagerungsvorrichtung bewegt werden kann, können das Handhabungselement und die Verlagerungsvorrichtung zeitgleich in der Kommissionier-Position angeordnet sein, ohne sich zu stören. Dadurch kann der Quelloder Zielbehälter in der Kommissionier-Position von der Verlagerungsvorrichtung auf das Handhabungselement übergeben werden. Dies liefert den Vorteil, dass die Verlagerungsvorrichtung wieder in Richtung der Übernahmeposition bewegt werden kann, während der Kommissionier-Vorgang noch nicht abgeschlossen ist. Dadurch können die Wechselzeiten der Quell- oder Zielbehälter verkürzt werden.

Optional ist das Handhabungselement tischartig ausgebildet. Mit anderen Worten kann das Handhabungselement plattenartig ausgestaltet sein. Dadurch kann erreicht werden, dass das Handhabungselement unter einen Quell- oder Zielbehälter, welcher in der Kommissionier-Position angeordnet ist, verfahren werden kann.

Genauer gesagt kann das Handhabungselement in der ausgefahrenen Position unter den Quell- oder Zielbehälter verfahren werden. Durch die flache bzw. tischartige Ausgestaltung des Handhabungselements kann das Handhabungselement auch in einen geringen Freiraum hinein verlagert werden, um den Quell- oder Zielbehälter in der Kommissionier-Position zu übernehmen.

Optional kann das Handhabungselement dazu ausgestaltet sein, den Quell- oder Zielbehälter in der Kommissionier-Position zu unterfahren. Dadurch kann das Handhabungselement in eine Position gebracht werden, in der es den Quell- oder Zielbehälter problemlos stützen kann, sobald die Verlagerungsvorrichtung von der Kommissionier-Position in die Übernahmeposition verlagert wird.

Optional kann die Übergabevorrichtung dazu ausgestaltet sein, die Orientierung bei einer Bewegung des Quell- oder Zielbehälters aus der Kommissionier-Position, zu variieren. Dies kann umgesetzt werden, wenn der Quell- oder Zielbehälter in der Kommissionier-Position geneigt angeordnet ist. Da der Abförderer (d. h. die Fördervorrichtung, die im Anschluss an die Übergabevorrichtung vorgesehen ist) horizontal angeordnet ist. Somit muss die Übergabevorrichtung den abzufördernden Quell- oder Zielbehälter wieder in eine horizontale Position verlagern. Dadurch kann die Pick- und/oder Pack-Station problemlos an herkömmliche Förderer angeschlossen werden.

Optional ist die Übergabevorrichtung dazu ausgestaltet, den Quell- oder Zielbehälter von einer relativ zu horizontalen geneigten Position in der Kommissionier-Position in eine andere Neigung zu überführen. Optional ist die andere Neigung im Wesentlichen parallel zu der Horizontalen. Somit kann problemlos die Pickund/oder Pack-Station an einen Abförderer angeschlossen werden. Die Übergabevorrichtung kann hierbei ein Kippen des Quell- oder Zielbehälters ermöglichen. Zusätzlich oder alternativ kann der Übergabeförderer eine Bogenform beschreiben, sodass der Quell- oder Zielbehälter in eine andere Orientierung (d. h. beispielsweise Neigung) überführt werden kann. Somit kann der Quell- oder Zielbehälter bei einer Abförderung im Wesentlichen parallel zu der Horizontalen vorgesehen sein.

Optional kann die Übergabevorrichtung ein Förderelement aufweisen, wobei das Handhabungselement dazu ausgestaltet ist, den Quell- oder Zielbehälter auf das Förderelement zu bringen. Das Handhabungselement kann keinerlei Förderelement oder dergleichen aufweisen. Da das Handhabungselement selbst verlagerbar ausgestaltet sein kann, ist es nicht notwendig, dass das Handhabungselement selbst ein Förderelement aufweist. Vielmehr kann das Förderelement an einem feststehenden Teil der Übergabevorrichtung vorgesehen sein. Das Handhabungselement, welches das bewegliche Teil der Übergabevorrichtung sein kann, kann den Quell- oder Zielbehälter aus der Kommissionier-Position herausziehen und auf das feststehende Teil der Übergabevorrichtung bewegen. Dort kann der Quelloder Zielbehälter dann mit dem Förderelement in Kontakt gelangen, wodurch der Quell- oder Zielbehälter abtransportiert werden kann. Die Übergabevorrichtung kann konstant eine Neigung aufweisen, die der Neigung des Quell- oder Zielbehälters in der Kommissionier-Position entspricht. Wird der Quell- oder Zielbehälter durch das Förderelement auf der Übergabevorrichtung gefördert, kann der Quelloder Zielbehälter über eine Kante gefördert werden, sodass der Quell- oder Zielbehälter auf einen Abförderer kippt. Der Abförderer kann hierbei im Wesentlichen parallel zu der Horizontalen ausgestaltet gerichtet sein. Dadurch kann der Quelloder Zielbehälter aus der geneigten Position auf einfache Art und Weise in die horizontale Position zurückgeführt werden und problemlos durch den Abförderer abtransportiert werden.

Optional kann das Förderelement feststehen angeordnet sein. Mit anderen Worten kann das Förderelement an dem Teil der Übergabevorrichtung vorgesehen sein, welches feststehend vorgesehen ist. Dadurch kann die Übergabevorrichtung insgesamt einfach ausgestaltet sein, da es hier zu keinen Bewegung von angetriebenen Teilen kommt.

Optional kann das Handhabungselement zumindest ein Hakenelement aufweisen, das zwischen einer ausgefahrenen Position und eine eingefahrenen Position verlagerbar ist, wobei das Hakenelement in der ausgefahrenen Position dazu ausgestaltet ist, den Quell- oder Zielbehälter mit dem Handhabungselement in Eingriff zu bringen. Mit anderen Worten kann, wenn das Handhabungselement unter den Quell- oder Zielbehälter gefahren ist und sich somit in der Kommissionier-Position befindet, das Hakenelement in die ausgefahrene Position verlagert werden, sodass bei einem Zurückbewegen des Handhabungselements in die eingefahrene Position der Quell- oder Zielbehälter mitgenommen werden kann. Das zumindest eine Hakenelement kann als eine Art Widerhaken ausgestaltet sein, sodass es problemlos an dem Quell- oder Zielbehälter vorbeigeführt werden kann, wenn das Handhabungselement in die Kommissionier-Position verlagert wird, jedoch den Quell- oder Zielbehälter mitnimmt, sobald das Handhabungselement in die entgegengesetzte Richtung (d. h. von der ausgefahrenen Position des Handhabungselements in die eingefahrene Position des Handhabungselements) verlagert wird. Dadurch kann ein einfaches System bereitgestellt sein, welches zuverlässig den Quell- oder Zielbehälter aus der Kommissionier-Position abfördern kann.

Optional kann die Übergabevorrichtung einem ihr zugeordneten Antrieb aufweisen. Mit anderen Worten kann die Übergabevorrichtung einen eigenen Antrieb aufweisen. Der Antrieb der Übergabevorrichtung kann ausschließ dafür vorgesehen sein, die Übergabevorrichtung anzutreiben. Dadurch kann die Steuerung vereinfacht werden, da der Antrieb nur und ausschließlich die Übergabevorrichtung betreiben muss. Die Verlagerungsvorrichtung kann einen eigenen Antrieb aufweisen. Mit anderen Worten können beide Vorrichtungen (d. h. die Übergabevorrichtung und die Verlagerungsvorrichtung) individuelle und separate Antriebe aufweisen, die nicht miteinander gekoppelt sind. Dadurch kann eine individuelle Steuerung beider Elemente realisiert sein. Ferner ist die Fehleranfälligkeit reduziert, welche durch etwaige mechanische Kopplung beider Elemente vorliegen können.

Optional weist die Pick- und/oder Pack-Station eine Schnittstelle auf, die dazu ausgestaltet ist, dass ein Nutzer Befehle eingeben kann. Somit kann die Pickund/oder Pack-Station beispielsweise eine Schnittstelle aufweisen, mit der der Nutzer signalisieren kann, dass der Kommissionier- oder Packauftrag abgeschlossen ist. Somit kann der Nutzer den Abtransport eines derzeit in der Kommissionier-Position befindlichen Behälters oder Kartons initiieren. Die Schnittstelle kann beispielsweise ein Touchpad oder ein Knopf sein. Dadurch kann individuell auf die Arbeitsgeschwindigkeit der Kommissionierperson der Kommissionier- oder Pack-vorgang ablaufen.

Gemäß einem weiteren Aspekt der vorliegenden Offenbarung wird ein Pickund/oder Pack-System mit einer Pick- und/oder Pack-Station gemäß einer der obigen Ausführungsformen bereitgestellt. Das Pick- und/oder Pack-System kann eine Zufuhrvorrichtung zum Zuführen des Quell- oder Zielbehälters umfassen. Die Zufuhrvorrichtung kann ein Förderelement wie beispielsweise ein Bandförderer oder ein Rollenförderer sein. Die Zufuhrvorrichtung kann hierbei im Wesentlichen parallel zu der horizontalen ausgestaltet sein. Die Zufuhrvorrichtung kann einen Quelloder Zielbehälter der Übernahmeposition zufördern. Von der Zufuhrvorrichtung kann der Behälter dann auf die Verlagerungsvorrichtung überführt werden. Somit kann die Pick- und/oder Pack-Station an ein beliebiges Förderersystem angeschlossen werden.

Optional umfasst das Pick- und/oder Pack-System eine Abfuhrvorrichtung zum Abführen eines Behälters oder Kartons. Die Abfuhrvorrichtung kann parallel zu der Horizontalen angeordnet sein. Die Zufuhrvorrichtung und die Abfuhrvorrichtung können parallel zueinander angeordnet sein. Die Zufuhrvorrichtung und die Abfuhrvorrichtung können übereinander in der Schwererichtung vorgesehen sein. Die Abfuhrvorrichtung kann einen Quell- oder Zielbehälter von der Übergabevorrichtung übernehmen. Die Abfuhrvorrichtung kann im Wesentlichen analog zu der Zufuhrvorrichtung ausgestaltet sein.

Optional weist das Pick- und/oder Pack-System eine Vielzahl von Stellplätzen zur jeweiligen Aufnahme eines Zielbehälters oder Zielkartons auf. Ein Zielbehältnis kann ein Behälter oder Karton sein, in den Artikel aus einem Quell- oder Zielbehälter einzusortieren sind. Die Stellplätze können genauso geneigt sein wie der Quelloder Zielbehälter in der Kommissionier-Position. Die Stellplätze können einen Fördererantrieb aufweisen, der die Zielbehälter abtransportieren und neue Zielbehälter antransportieren kann. Die Stellplätze sind vorzugsweise aneinander angrenzend neben der Pick- und/oder Pack-Station vorgesehen.

Optional sind die Stellplätze zusammen mit der Pick- und/oder Pack-Station auf einer Geraden nebeneinander angeordnet. Somit kann eine Kommissionierperson die Artikel aus den Quell- oder Zielbehältern in die Zielbehälter überführen, ohne dass die Kommissionierperson große Strecken zurücklegen muss.

Optional weist jeder Stellplatz eine Schnittstelle auf, die dazu ausgestaltet ist, Befehle eines Nutzers entgegenzunehmen. Der Nutzer kann hier die Kommissionierperson sein. Der Nutzer kann beispielsweise auf einem Plan oder auf einem anderen Wiedergabeelement (beispielsweise Monitor; Oberlicht-/Laser oder dergleichen) erkennen, welche Artikel aus dem Quell- oder Zielbehälter in welchen Zielbehälter überführt werden soll. Sind alle Artikel in einem Zielbehälter angeordnet, welche dort hinein zu verlagern sind, kann die Kommissionierperson mittels Schnittstelle vermitteln, dass der Zielbehälter vollständig gefüllt ist. Dadurch kann das System erkennen, dass der jeweilige Zielbehälter abzutransportieren ist. Dann wird der Zielbehälter abgefördert und ein neuer Zielbehälter bereitgestellt. Während der volle Zielbehälter abtransportiert wird, kann die Kommissionierperson den Kommissionier-/ Pack-Vorgang mit anderen Zielbehältnissen fortführen. Daher ist es nicht beeinträchtigend, dass ein Zielbehälter auf gleichem Strecken-Niveau zugeführt und abgeführt wird. Ist eine besonders platzoptimierte und dynamische Ausführung notwendig und soll auch ein Zielbehältnis möglichst rasch gewechselt werden, oder es die prozessualen Anforderungen aus Artikel und Auftragsstrukturen sowie Kommissionier- und/oder Pack-Vorgängen und damit einhergehender Nutzung von Behältern und/oder Kartons es erfordern, als Quellartikel- und/oder Auftragsartikel-Behältnis zu fungieren, kann die Einrichtung ebenfalls für die Bereitstellung und das Wechseln von Zielbehältnissen fungieren, um so auch einen schnellen Wechsel der Zielbehälter zu ermöglichen.

Gemäß einem weiteren Aspekt der vorliegenden Offenbarung wird ein Verfahren zum Bereitstellen eines Quell- oder Zielbehälters in einer Pick- und/oder Pack-Station bereitgestellt. Bei der Pick- und/oder Pack-Station handelt es sich insbesondere um eine Pick- und/oder Pack-Station gemäß einem der vorhergehenden Ausführungsformen. Das Verfahren kann ein Bereitstellen des Quell- oder Zielbehälters in der Übernahmeposition umfassen. Das Verfahren kann ein Verlagern des Quell- oder Zielbehälters von der Übergabeposition in die Kommissionier-Position umfassen. Bei der Verlagerung des Quell- oder Zielbehälters von der Übernahmeposition in die Kommissionier-Position kann der Quell- oder Zielbehälter in der Schwererichtung verlagert werden. Somit kann der Quell- oder Zielbehälter über eine Zufuhrvorrichtung in die Übernahmeposition gefördert werden und dort durch die Verlagerungsvorrichtung übernommen werden. Dann kann der Quell- oder Zielbehälter von der Verlagerungsvorrichtung auf eine Warteposition angehoben werden. Ist der Pick-Vorgang abgeschlossen und wird der in der Kommissionier-Position befindliche Quell- oder Zielbehälter durch die Übergabevorrichtung abtransportiert, kann der Quell- oder Zielbehälter, welcher von der Verlagerungsvorrichtung in einer Mitten-Stellung gehalten wird in die Kommissionier-Position angehoben werden. Gleichzeitig kann der abzufördernde Quell- oder Zielbehälter durch die Übergabevorrichtung abtransportiert werden. Ist der neue Quell- oder Zielbehälter in der Kommissionier-Position angekommen, kann die Übergabevorrichtung mittels Handhabungselement den nun in der Kommissionier-Position angeordneten Quellebehälter unterfahren, sodass der Quellebehälter während dem Kommissionier-Vorgang durch das Handhabungselement gestützt wird. Die Verlagerungsvorrichtung oder Hubschlitten kann dann bereits wieder in Richtung Übernahmeposition abgesenkt werden.

Optional kann während der Verlagerung des Quell- oder Zielbehälters von der Übernahmeposition in die Kommissionier-Position eine Orientierung des Quelloder Zielbehälters variiert werden. Dadurch kann in der Kommissionier-Position eine geneigte Position bzw. Orientierung des Quell- oder Zielbehälters bereitgestellt sein. Dadurch kann die Entnahme der Artikel aus dem Quell- oder Zielbehälter vereinfacht sein.

Optional kann, wenn der Quell-Behälter in der Kommissionier-Position ist, ein Handhabungselement einer Übergabevorrichtung so verlagert werden, dass das Handhabungselement den Quell- oder Zielbehälter trägt. Dadurch ist es nicht notwendig, dass die Verlagerungsvorrichtung in der Kommissionier-Position verbleibt, um den Quell- oder Zielbehälter zu tragen, sondern die Verlagerungsvorrichtung kann wieder zurück in die Übernahmeposition verlagert werden, um den nächsten Quell- oder Zielbehälter zu übernehmen. Dadurch können die Taktzeiten erheblich verringert werden.

Optional kann, wenn das Handhabungselement den Quell- oder Zielbehälter in der Kommissionier-Position trägt, die Verlagerungsvorrichtung in Richtung der Übergabeposition verlagert werden. Dadurch kann das Verlagerungselement gleich wieder in eine Position gebracht werden, wo ein neuer Quell- oder Zielbehälter übernommen werden kann.

Optional kann das Handhabungselement nach Beendigung eines Pick-Vorgangs den Quell- oder Zielbehälter aus der Kommissionier-Position ziehen. Dadurch kann der Quell- oder Zielbehälter zu einer Abfuhrvorrichtung gefördert werden und die Kontur freigemacht werden, sodass ein neuer Quell- oder Zielbehälter in Kipp-Position verlagert werden kann.

Gemäß einem weiteren Aspekt wird eine Verwendung einer Pick- und/oder Pack-Station gemäß einer der obigen Ausführungsformen während eines Pick-Vorgangs bereitgestellt.

Einzelne Merkmale und Ausführungsformen können mit anderen Merkmalen und anderen Ausführungsform kombiniert werden und so neue Ausführungsformen bilden. Ausgestaltungen und Vorteile, die in Verbindung mit den Ausführungsformen oder den Merkmalen genannt sind, gelten dann analog auch für die neuen Ausführungsformen. Vorteile und Ausgestaltungen, die in Verbindung mit der Vorrichtung genannt sind, gelten analog auch für das Verfahren und andersherum.

Im Folgenden werden Ausführungsformen des Gegenstands der vorliegenden Offenbarung mit Bezug auf die beigefügten Zeichnungen im Detail beschrieben:
- **Fig. 1**: zeigt eine schematische und perspektivische Ansicht eines Kommissionier-Systems gemäß einer Ausführungsform der vorliegenden Offenbarung.
- **Fig. 2**: zeigt einen schematischen Schnitt durch eine Pick- und/oder Pack-Station gemäß einer Ausführungsform der vorliegenden Offenbarung.
- **Fig. 3**: zeigt einen schematischen Schnitt durch ein Kommissionier-System gemäß einer Ausführungsform der vorliegenden Offenbarung.
- **Fig. 4**: zeigt einen schematischen Schnitt durch ein Kommissionier-System gemäß einer Ausführungsform der vorliegenden Offenbarung.
- **Fig. 5**: zeigt einen schematischen Ausschnitt eines Teils der Pick- und/oder Pack-Station gemäß einer Ausführungsform der vorliegenden Offenbarung.
- **Fig. 6**: zeigt einen schematischen Ausschnitt eines Teils der Pick- und/oder Pack-Station gemäß einer Ausführungsform der vorliegenden Offenbarung.
- **Fig. 7**: zeigt einen schematischen Ausschnitt eines Teils der Pick- und/oder Pack-Station gemäß einer Ausführungsform der vorliegenden Offenbarung.

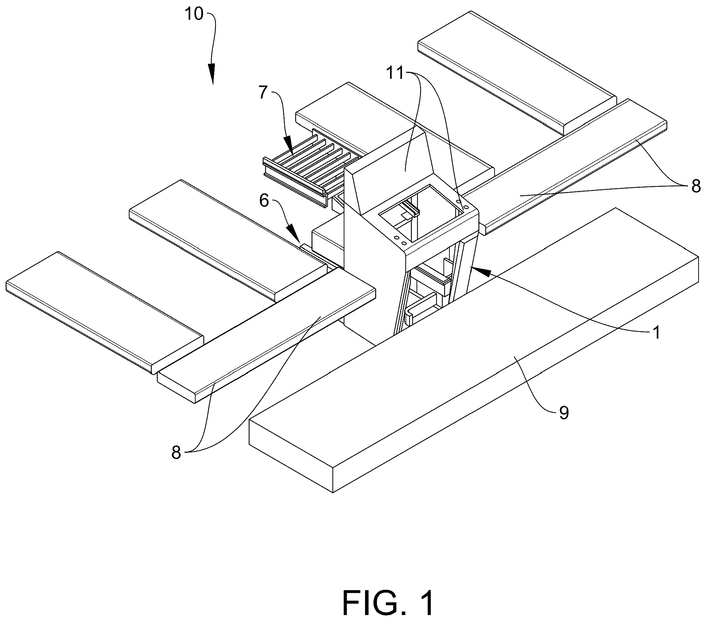

**Fig. 1** ist eine schematische perspektivische Ansicht eines Pick- und/oder Pack-Systems 10 gemäß einer Ausführungsform der vorliegenden Offenbarung. Das Pick- und/oder Pack-System 10 kann auch als Pick-und/oder Pack-Systems 10 bezeichnet werden. Das Pick- und/oder Pack-System 10 weist eine Pick- und/oder Pack-Station 1 zum Bereitstellen von Quell- oder Zielbehälter 2 (in Fig. 1 nicht dargestellt) auf. Ferner weist das Pick- und/oder Pack-System 10 eine Vielzahl von Stellplätzen 8 für Zielbehältnisse Zielbehälter auf. Eine Kommissionierperson Arbeitsperson steht auf einer höhenverstellbaren Plattform 9 und entnimmt aus einem Quell-Behälter 2, der an der Pick- und/oder Pack-Station 1 bereitgestellt ist, einzelne Waren und führt diese entsprechend den übermittelten Anweisungen Zielbehältern, die an den Stellplätzen bereitgestellt sind, zu. Die Pick- und/oder Pack-Station 1 weist eine Schnittstelle 11 auf, mit der Informationen an den Nutzer übermittelt werden. Ferner umfasst die Schnittstelle Taster, die an der Pickund/oder Pack-Station 1 angeordnet sind, sodass der Nutzer nicht nur Informationen aufnehmen kann, sondern auch selbst Informationen in das System eingeben kann. Beispielsweise kann der Nutzer signalisieren, dass ein Quell- oder Zielbehälter leer ist. Die Kommissionier- und/oder Pack-Station 1 kann auch als Vertikalschacht bezeichnet werden. Vertikalschacht deswegen, weil die Quell- oder Zielbehälter (2) in der Schwererichtung bewegt werden. Genauer gesagt werden die Quell- oder Zielbehälter 2 auf einer Zufuhrvorrichtung 6 der Pick- und/oder Pack-Station 1 zugeführt, dort vertikal angehoben, dann einem Kommissionier-Vorgang unterzogen und über eine Abfuhrvorrichtung 7 wieder abgeführt. Die Abfuhrvorrichtung 7 befindet sich vertikal (d.h. in der Schwererichtung) oberhalb der Zufuhrvorrichtung 6. Bei der vorliegenden Ausführungsform weist jeder Stellplatz 8 eine eigene Ab- und Zufuhrvorrichtung auf. Die Behälter können aber auch auf andere Art und Weise an den Stellplätzen 8 bereitgestellt werden. Wie in Fig. 1 erkennbar ist, sind die Stellplätze 8 in einer Reihe angeordnet mit der Kommissionier- und/oder Pack-Station unmittelbar daran anschließend. In einer weiteren nicht dargestellten Ausführungsform sind zwei oder mehr Pick- und/oder Pack-Station 1 nebeneinander angeordnet. Hierbei kann ein Teil der Pick- und/oder Pack-Stationen 1 Quellbehälter bereitstellen und ein anderer Teil der Pickund/oder Pack-Stationen 1 kann Zielbehälter bereitstellen. Dadurch kann auf engstem Raum ein hochmodulares System geschaffen werden.

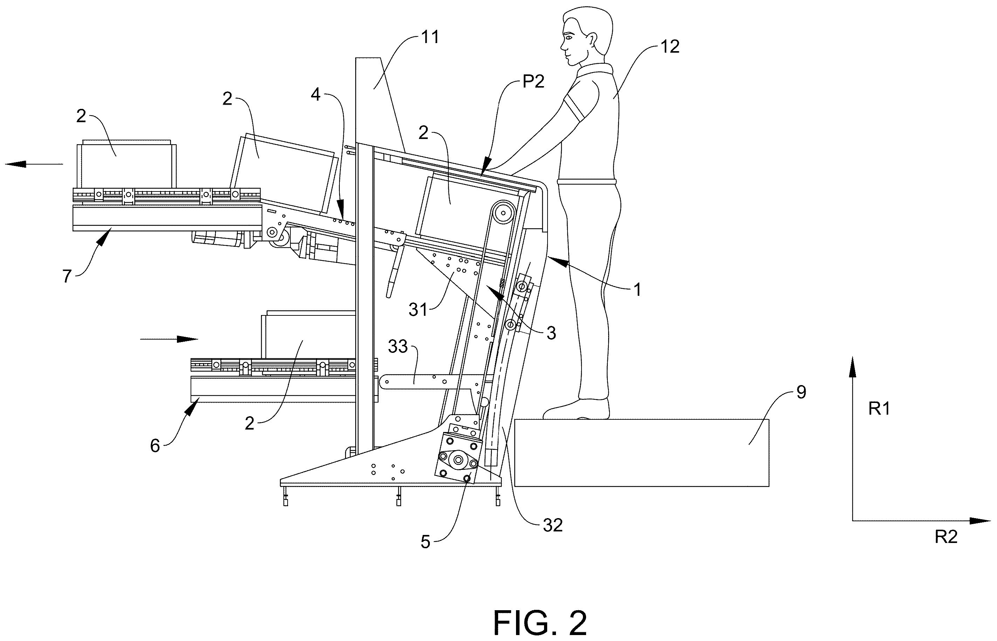

**Fig. 2** ist eine schematische Schnittansicht der Kommissionier- und/oder Pack-Station 1 gemäß einer Ausführungsform der vorliegenden Offenbarung.

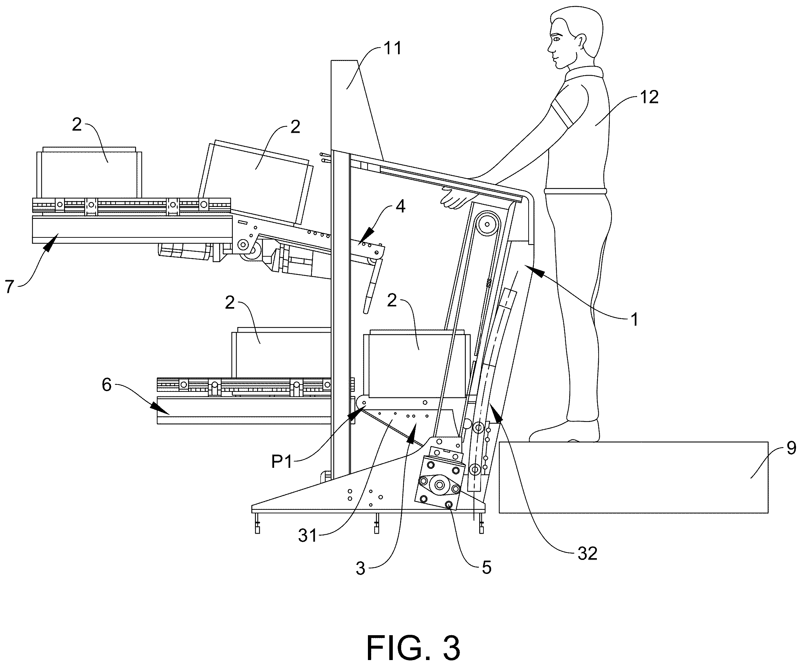

In Fig. 1 ist die Zufuhrvorrichtung 6 erkennbar, auf der Quell- oder Zielbehälter zugeführt werden (siehe Pfeil in Fig. 2). Nach dem Kommissionier-Vorgang in der Pick- und/oder Pack-Station 1 werden die Quell- oder Zielbehälter 2 über eine Abführvorrichtung 7 abgeführt (siehe Pfeil in Fig. 2). Die Pick- und/oder Pack-Station übernimmt den Quell- oder Zielbehälter / Quellkarton 2 an einer Übernahmeposition. Dabei wird der Quellebehälter 2 auf eine Verlagerungsvorrichtung 3 aufgebracht. Dies geschieht durch einen Transportmechanismus 33, der den Quelloder Zielbehälter 2 von der Zufuhrvorrichtung 6 auf die Verlagerungsvorrichtung 3 bewegt. Anschließend kann die Verlagerungsvorrichtung 3 den Quell- oder Zielbehälter in der Schwererichtung R1 bewegen. Genauer gesagt kann die Verlagerungsvorrichtung 3 den Quell- oder Zielbehälter 2 in die Kommissionier-Position P2 bringen. In der Kommissionier-Position P2 kann ein Nutzer 12 effizient in den Quell- oder Zielbehälter eingreifen und Artikel entnehmen und Zielbehältern zuführen. Ferner ist die Verlagerungsvorrichtung 3 in einer Führung 32 geführt, sodass bei der Verlagerung von der Übernahmeposition P1 (siehe Fig. 3) in die Kommissionier-Position P2 der Quell- oder Zielbehälter 2 relativ zur Horizontalen (102) geneigt wird. Dadurch kann der Nutzer 12 noch effizienter in den Quellebehälter eingreifen.

**Fig. 3** ist eine schematische Schnittansicht der Kommissionier- und/oder Pack-Station 1 gemäß einer Ausführungsform der vorliegenden Offenbarung. Die in Fig. 3 dargestellte Pick- und/oder Pack-Station 1 entspricht im Wesentlichen der in Fig. 2 dargestellten Kommissionier- und/oder Pack-Station 1 mit dem Unterschied, dass sich die Verlagerungsvorrichtung 3 in einer anderen Position befindet. Genauer gesagt befindet sich die Verlagerungsvorrichtung 3 in Fig. 3 in der Übernahmeposition P1. Hierbei ist zu erkennen, dass der Nutzer 12 keinen direkten Zugriff auf den Quell- oder Zielbehälter hat. Die Quell- oder Zielbehälter wurde gerade von der Zufuhrvorrichtung 6 übernommen und ist nun bereit in der Schwererichtung R1 bewegt zu werden. Die Übergabevorrichtung 4 transportiert in der in Fig. 3 gezeigten Ausführungsform gerade einen Quell- oder Zielbehälter ab, um ihn der ab für Vorrichtung 7 zuzuführen.

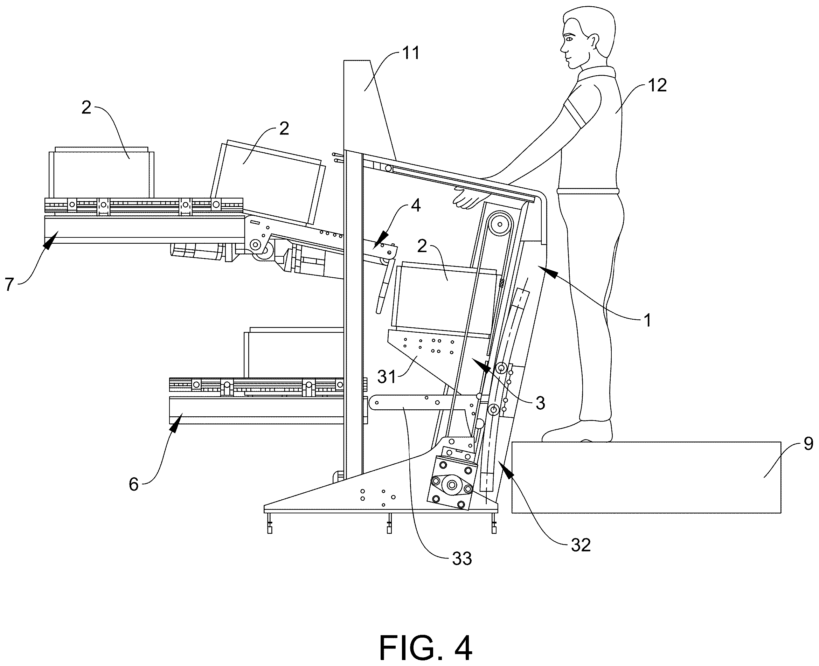

**Fig. 4** ist eine schematische Schnittansicht der Pick- und/oder Pack-Station 1 gemäß einer Ausführungsform der vorliegenden Offenbarung. Die in Fig. 4 dargestellte Station 1 entspricht im Wesentlichen der in Fig. 3 dargestellten Pickund/oder Pack-Station mit dem Unterschied, dass sich die Verlagerungsvorrichtung 3 auf dem Weg zwischen der Übernahmeposition P1 und der kommissioniert Position P2 befindet. Zu erkennen ist, dass der Transportmechanismus 33 sich nicht bewegt und an der Übernahmeposition P1 verbleibt. Vielmehr bewegt sich von der Verlagerungsvorrichtung 3 lediglich eine Trägerstruktur 31 zwischen der Übernahmeposition und der Kommissionier-Position P2.

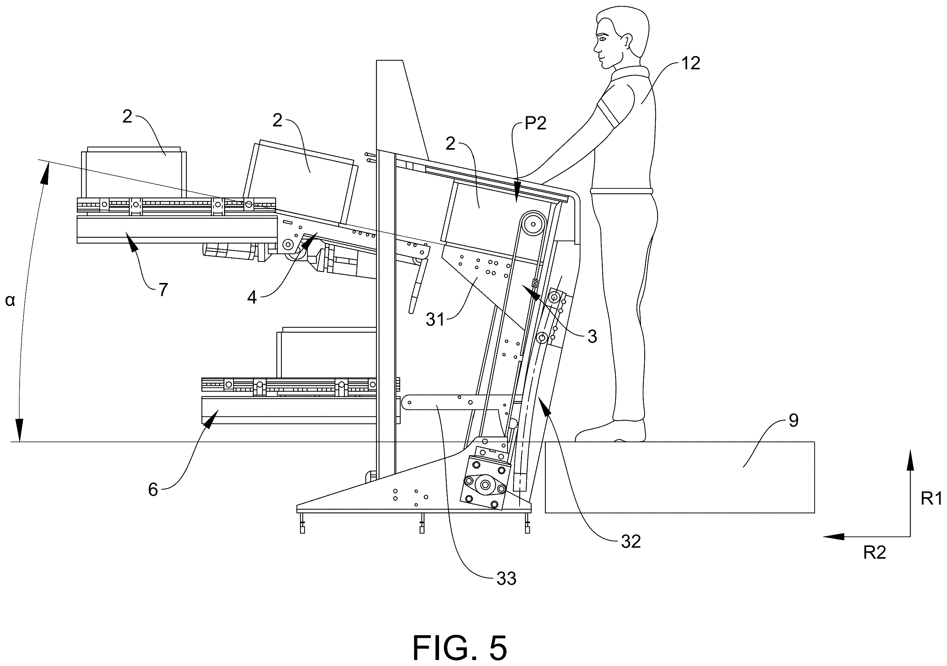

**Fig. 5** ist eine schematische Schnittansicht der Kommissionier- und oder Pack-Station 1 gemäß einer weiteren Ausführungsform der vorliegenden Offenbarung. Fig. 5 unterscheidet sich insofern von der Fig. 4, dass der Quell- oder Zielbehälter in der Kommissionier-Position P2 angeordnet ist. In der Kommissionier-Position P2 kann der Nutzer 12 direkt in die Quell- oder Zielbehälter 2 eingreifen und Artikel entnehmen oder je nach prozessualer Nutzung auch hineinlegen. Durch die gebogene Führung 32 weist der Quell- oder Zielbehälter 2 eine Neigung relativ zu der horizontalen R2 auf. Bei der vorliegenden Ausführungsform weist die Neigung 12° auf. Hierbei hat sich gezeigt, dass diese Neigung die bestmögliche Effizienz zum Handhaben von Artikeln bereitstellt.

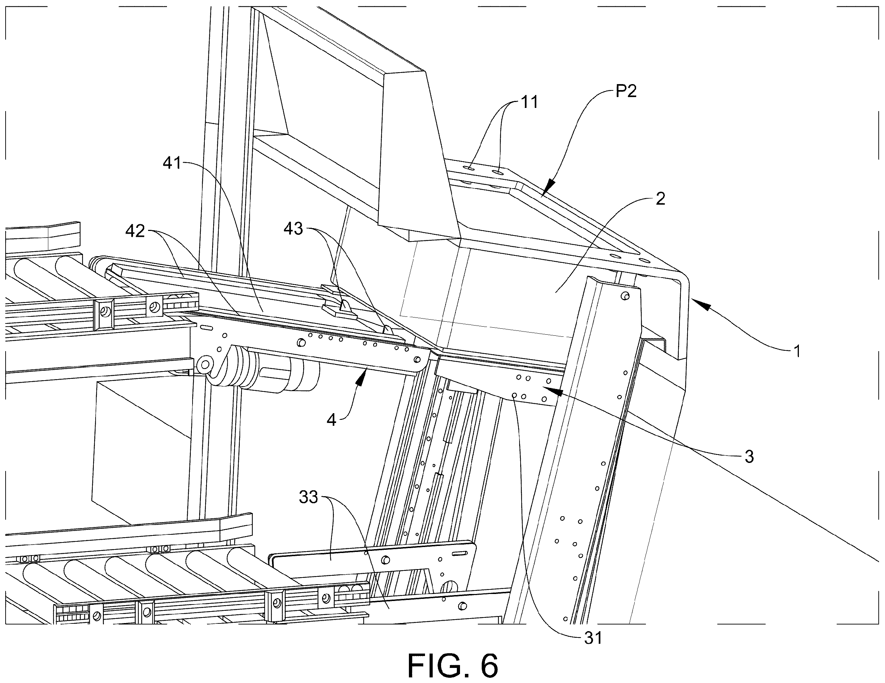

**Fig. 6** ist eine schematische und perspektivische Ansicht eines Teils der Kommissionier- und oder Pack-Station. Bei der in Fig. 6 dargestellten Pick- und/oder Pack-Station 1 befindet sich der Quell- oder Zielbehälter in der Kommissionier-Position P2. Die Tragstruktur der Verlagerungsvorrichtung 3 befindet sich in diesem Zustand ebenfalls in der Kommissionier-Position P2. Der Transportmechanismus 33 ist feststehend und bleibt permanent in der Übergabeposition B1.Die Tragstruktur 31 der Verlagerungsvorrichtung 3 befindet sich in diesem Zustand ebenfalls in der Kommissionier-Position P2. Der Transportmechanismus 33 ist feststehend und bleibt permanent in der Übergabeposition B1. Die Übergabevorrichtung P4 ist hierbei in derselben Neigung angeordnet wie die Trägerstruktur 31 in der Kommissionier-Position. Die Übergabevorrichtung 4 weist ein Handhabungselement 41 auf, welches beweglich ist. Ferner weist die Übergabevorrichtung 4 feststehende Förderelemente 42 auf. Das Handhabungselement 41 kann sich unter den Quelloder Zielbehälter 2 verlagern und mittels Hakenelement 43 den Quell- oder Zielbehälter 2 auf die Förderelemente 42 ziehen. Dadurch kann der Quell- oder Zielbehälter 2 zum einen durch das Handhabungselement gestützt werden, wenn die Trägerstruktur 31 sich auf den Weg in die Übernahmeposition P1 befindet, und zum anderen kann der Quell- oder Zielbehälter aus der Blickposition entnommen werden.

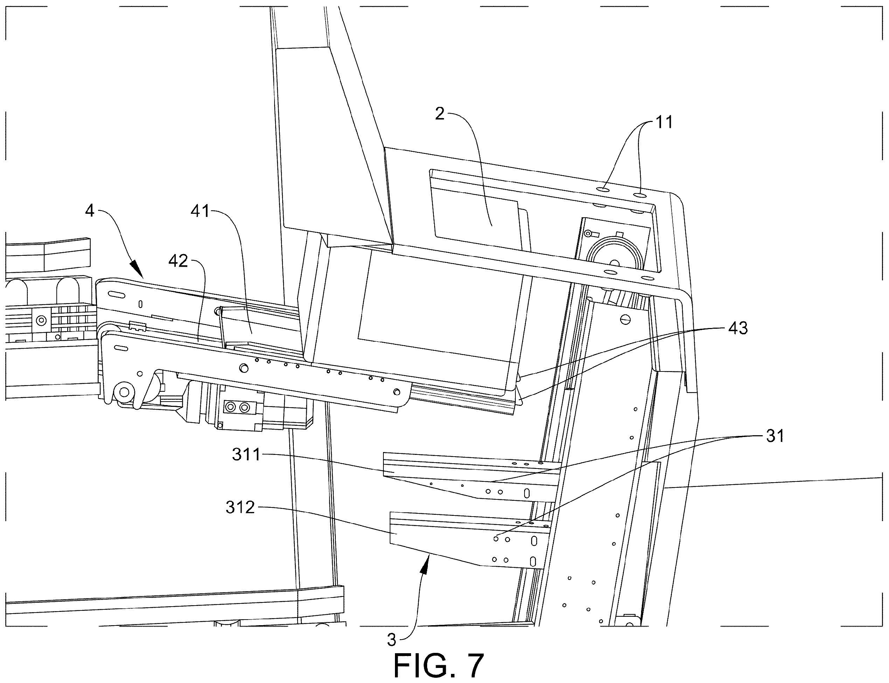

**Fig. 7** ist eine schematische perspektivische Ansicht eines Ausschnitts der Kommissionier- und/oder Pack-Station 1. In der Fig. 7 ist das Handhabungselement 41 unter den Quell- oder Zielbehälter 2 verfahren und zieht diesen gerade mittels der Hakenelement 43 auf die Förderelemente 42. Dadurch kann in der Pick- und/oder Pack-Station 1 Platz geschaffen werden, dass die Verlagerungsvorrichtung 3 einen neuen Quell- oder Zielbehälter 2 in die Kommissionier-Position bringen kann. Von der Übergabevorrichtung 4 wird der Quell- oder Zielbehälter dann auf eine Abfuhrvorrichtung 7 überführt.

### Bezugszeichenliste:

- 1: Pick- und/oder Pack-Station
- 2: Quell- oder Zielbehälter
- 3: Verlagerungsvorrichtung
- 4: Übergabevorrichtung
- 5: Linearantrieb
- 6: Zufuhrvorrichtung
- 7: Abfuhrvorrichtung
- 9: Podest
- 10: Kommissionier- und/oder Pack-System
- 11: Schnittstelle
- 12: Nutzer
- 31: Trägerstruktur
- 32: Führung
- 33: Transportmechanismus
- 41: Handhabungselement
- 42: Förderelemente
- 43: Hakenelement
- P1: Übernahmeposition
- P2: Kommissionier-Position

## Patentansprüche

1. Pick- und/oder Pack-Station (1) zum Bereitstellen eines Quell- oder Zielbehälters (2), umfassend
eine Verlagerungsvorrichtung (3) zum Verlagern des Quell- oder Zielbehälters (2) von einer Übernahmeposition (P1) in eine Kommissionier-Position (P2),
eine Übergabevorrichtung (4) zum Verlagern des Quell- oder Zielbehälters-(2) von der Kommissionier-Position in eine Abgabeposition,
wobei die Verlagerungsvorrichtung (3) dazu ausgestaltet ist, bei einer Verlagerung des Quell- oder Zielbehälters (2) von der Übernahmeposition in die Kommissionier-Position, den Quell- oder Zielbehälter (2) in der Schwererichtung (R1) zu verlagern.

2. Pick- und/oder Pack-Station (1) gemäß Anspruch 1, wobei die Verlagerungsvorrichtung (3) eine gabelartige Trägerstruktur (31) zum Tragen des Quelloder Zielbehälters (2) aufweist.

3. Pick- und/oder Pack-Station (1) gemäß einem der vorhergehenden Ansprüche, wobei die Verlagerungsvorrichtung (3) dazu ausgestaltet ist, während einer Verlagerung des Quell- oder Zielbehälters (2) von der Übernahmeposition in die Kommissionier-Position, den Quell- oder Zielbehälter (2) relativ zu der Horizontalen zu neigen.

4. Pick- und/oder Pack-Station (1) gemäß einem der vorhergehenden Ansprüche, wobei die Verlagerungseinrichtung (3) dazu ausgestaltet ist, die Orientierung des Quell- oder Zielbehälters (2) bei einer Verlagerung des Quelloder Zielbehälters (2) zwischen der Übernahmeposition und der Kommissionier-Position zu variieren.

5. Pick- und/oder Pack-Station (1) gemäß einem der vorhergehenden Ansprüche, wobei die Verlagerungsvorrichtung (3) bei einer Verlagerung des Quelloder Zielbehälters (2) von der Übernahmeposition in die Kommissionier-Position in einer Führung (32) geführt ist.

6. Pick- und/oder Pack-Station (1) gemäß einem der vorhergehenden Ansprüche, wobei die Führung (32) so ausgestaltet ist, dass die Verlagerungsvorrichtung (3) bei einer Verlagerung des Quell- oder Zielbehälters (2) zwischen der Übernahmeposition und der Kommissionier-Position, die Orientierung des Quell- oder Zielbehälters (2) variieren kann.

7. Pick- und/oder Pack-Station (1) gemäß einem der vorhergehenden Ansprüche, wobei die Verlagerungsvorrichtung (3) bei einer Verlagerung des Quelloder Zielbehälters (2) von der Übernahmeposition in die Kommissionier-Position eine bogenförmige Trajektorie beschreibt.

8. Pick- und/oder Pack-Station (1) gemäß einem der vorhergehenden Ansprüche, wobei die Pickstation einen Transportmechanismus (33) aufweist, der dazu ausgestaltet ist, den Quell- oder Zielbehälter (2) in die Übernahmeposition zu transportieren, so dass die Verlagerungsvorrichtung (3) den Quelloder Zielbehälter (2) handhaben kann.

9. Pick- und/oder Pack-Station (1) gemäß einem der vorhergehenden Ansprüche, wobei die Übergabevorrichtung (4) einen ihr zugeordneten Antrieb aufweist.

10. Pick- und/oder Pack-Station (1) gemäß einem der vorhergehenden Ansprüche, wobei die Übergabevorrichtung (4) einen bewegliches Handhabungselement (41) aufweist, das dazu ausgestaltet ist, den Quell- oder Zielbehälter (2) aus der Kommissionier-Position zu ziehen.

11. Pick- und/oder Pack-Station (1) gemäß einem der vorhergehenden Ansprüche, wobei die Übergabevorrichtung (4) dazu ausgestaltet ist, die Orientierung bei einer Bewegung des Quell- oder Zielbehälters (2) aus der Kommissionier-Position, zu variieren.

12. Pick- und/oder Pack-Station (1) gemäß einem der vorhergehenden Ansprüche, wobei die Übergabevorrichtung (4) ein Förderelement aufweist, wobei das Handhabungselement (41) dazu ausgestaltet ist, den Quell- oder Zielbehälter (2) auf das Förderelement zu bringen.

13. Pick- und/oder Pack-Station (1) gemäß einem der vorhergehenden Ansprüche, wobei das Handhabungselement (41) zumindest ein Hakenelement (43) aufweist, das zwischen einer ausgefahrenen Position und einer eingefahrenen Position verlagerbar ist, wobei das Hakenelement (43) in der ausgefahrenen Position dazu ausgestaltet ist, den Quell- oder Zielbehälter-(2) mit dem Handhabungselement (41) in Eingriff zu bringen.

14. Pick- und/oder Packsystem (10) mit einer Pickstation gemäß einem der vorhergehenden Ansprüche, ferner umfassend:
eine Zufuhrvorrichtung (6) zum Zuführen des Quell- oder Zielbehälters-(2).

15. Verfahren zum Bereitstellen eines Quell- oder Zielbehälters (2) in einer Pickund/oder Pack-Station (1), insbesondere gemäß einem der vorhergehenden Ansprüche, umfassend:
Bereitstellen des Quell- oder Zielbehälters (2) in der Übernahmeposition,
Verlagern des Quell- oder Zielbehälters (2) von der Übergabeposition in die Kommissionier-Position,
wobei der Verlagerung des Quell- oder Zielbehälters (2) von der Übernahmeposition in die Kommissionier-Position, der Quell- oder Zielbehälter (2) in der Schwererichtung verlagert wird.
